**Europäisches Patentamt**

**European Patent Office**

**Office européen des brevets**

(11) Publication number: **0 126 895**
**B1**

(12) **EUROPEAN PATENT SPECIFICATION**

(45) Date of publication of patent specification: **10.08.88**

(21) Application number: **84103492.9**

(22) Date of filing: **29.03.84**

(51) Int. Cl.⁴: **B 62 D 25/06,** B 60 R 13/06

(54) **Construction of roofside portion of motor vehicle.**

(30) Priority: **22.04.83 JP 60467/83 u**

(43) Date of publication of application:
**05.12.84 Bulletin 84/49**

(45) Publication of the grant of the patent:
**10.08.88 Bulletin 88/32**

(84) Designated Contracting States:
**DE FR GB**

(56) References cited:
**EP-A-0 062 506**
**EP-A-0 068 367**
**DE-B-1 080 870**
**DE-B-1 274 902**
**US-A-4 070 055**

**Patent Abstracts of Japan vol. 6, no. 236, 25
November 1982**

(73) Proprietor: **TOYOTA JIDOSHA KABUSHIKI
KAISHA
1, Toyota-cho Toyota-shi
Aichi-ken 471 (JP)**

(72) Inventor: **Watanabe, Hiroyuki
TOYOTA JIDOSHA K.K. 1, Toyota-cho
Toyota-shi Aichi-ken (JP)**
Inventor: **Ohashi, Mikio
TOYOTA JIDOSHA K.K. 1, Toyota-cho
Toyota-shi Aichi-ken (JP)**

(74) Representative: **Tiedtke, Harro, Dipl.-Ing. et al
Patentanwaltsbüro Tiedtke-Bühling-Kinne-
Grupe-Pellmann-Grams-Struif Bavariaring 4
Postfach 20 24 03
D-8000 München 2 (DE)**

Courier Press, Leamington Spa, England.

## Description

This invention relates to a construction of a roofside portion of a motor vehicle according to the pre-characterizing portion of claim 1.

EP—A—0 068 367 shows a construction of a roofside portion, wherein a roof panel and a rain gutter panel form a drip channel. A weather strip, which is arranged between the rain gutter panel and an upper side of a door frame, the upper side of the door frame, a further weather strip, which is arranged between the door frame and a door glass, and the door glass are flush with the rain gutter panel.

Due to the construction of the drip channel comprising a roof panel and a rain gutter panel a continuous flush line between the roof panel and the door glass cannot exist. Due to the known arrangement of the drip channel close to the upper weather strip the wind breaking sound occurring in the drip channel penetrates into the vehicle compartment comparatively easily. In case that the drip channel indeed absorbs and drains off water, the connection point between the roof panel and the panel supporting it is subjected to this water, which on a long-term basis, may lead to damages of the connection point and leakage.

The problem underlying the subject matter of the invention is to develop the generic construction of a roofside portion of a motor vehicle in such a way that on the one hand a penetration of wind breaking sound into the vehicle compartment is prevented and on the other hand no connection point between the individual elements of the construction is subjected to directly injurious environmental influences.

This problem is solved by the features in the characterizing portion of claim 1. Owing to the continuous flush line between the roof panel and the door glass, no welding connection or any other connection between two sheet metal elements is subjected to directly injurious environmental influences. The construction of the drip channel in the roof panel enables that the drip channel can be arranged at a distance from the undersurface and the connection between the elements arranged at the outside of the vehicle and the roofside rail can be designed statically advantageously.

Advantageous modifications of the invention derive from the subclaims.

The invention will be readily apparent from consideration of the following specification relating to the accompanying drawings, in which like reference characters designate the same or similar parts throughout the figures thereof and wherein:

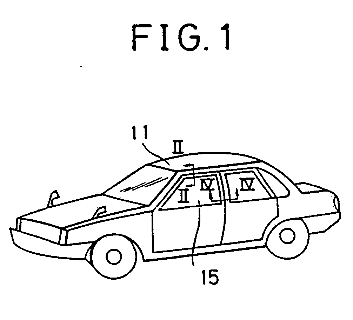

Fig. 1 is a perspective view showing the outer appearance of a motor vehicle;

Fig. 2 is an enlarged sectional view taken along the line II—II in Fig. 1; and

Fig. 3 is an enlarged sectional view taken along the line IV—IV in Fig. 1.

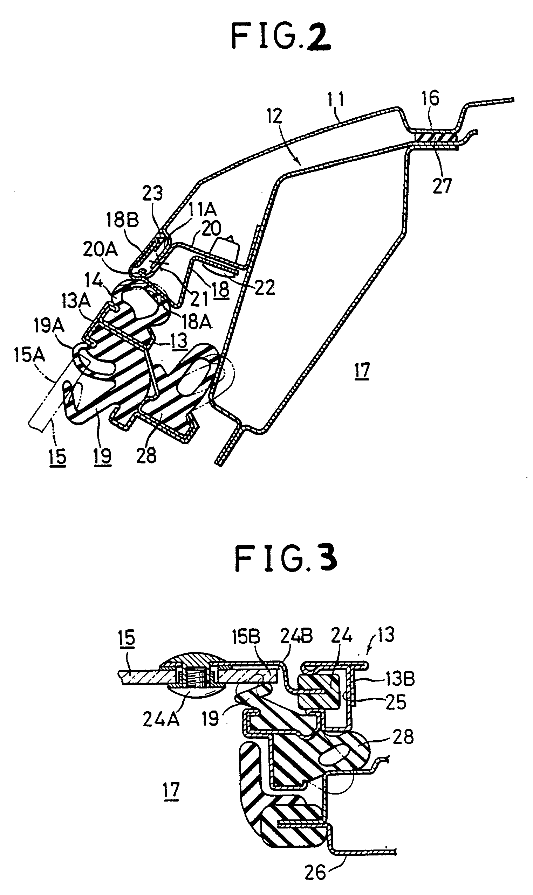

As shown in Fig. 2, a roof side portion of a motor vehicle comprises a roof panel 11, a side portion of which in the widthwise direction of a vehicle body covers an upper portion of a roofside rail 12 and extends to a position outwardly of the roofside rail 12 in the widthwise direction thereof, a roofside molding 18 secured to an end portion 11A of the roof panel 11 in the widthwise direction of the vehicle body and covering the outer side and the undersurface of the end portion 11A, an upper side 13A of a door frame 13, a door weather strip 14 adapted to be clamped between the upper side 13A of the door frame 13 and the roofside molding 18 when a door is closed, a door glass 15 and a door glass weather strip 19 secured to the door frame 13 in a manner to be clamped between an upper end edge portion 15A of the door glass 15 and the upper side 13A of the door frame 13 when the door glass 15 is closed, and the outer surfaces of the side portion of the roof panel 11, the roofside molding 18, the upper side 13A of the door frame 13, the door weather strip 14, the door glass weather strip 19 and the door glass 15 are substantially flush with one another in a manner to be smoothly continued when the door glass 15 and the door are fully closed.

In the roofside molding 18, an undersurface 18A thereof contacting the upper surface of the door weather strip 14 when the door is closed is formed to provide an inclined surface directed outwardly in the widthwise direction of the vehicle body and downwardly, whereby the inclined surface is brought into pressing contact with the door weather strip 14 when the door is closed, so that the door weather strip 14 cannot be pushed inwardly.

Overlappingly welded at a weld point 21 to the end portion 11A of the roof panel 11 in the widthwise direction of the vehicle body is a channel 20 extending inwardly in the widthwise direction of the vehicle body and connecting the end portion 11A of the roof panel 11 to the roofside rail 12.

The roofside molding 18 is threadably secured to the channel 20 through a screw 22 at a position between the end portion 11A of the roof panel 11 in the widthwise direction of the vehicle body and the roofside rail 12.

The roofside molding 18 extends from the position where it is threadably secured through the screw 22, passes through the undersurface 18A and reaches the outer surface of the vehicle body, where an outer surface portion 18B is formed which is bent and extended so as to be flush with the roof panel 11.

In other words, the outer surface portion 18B of the roofside molding 18 is extended so that the weld point 21 between the end portion 11A of the roof panel 11 in the widthwise direction of the vehicle body and the channel 20 can be covered from outside.

Furthermore, the channel 20 is extended outwardly of the end portion 11A of the roof panel 11 in the widthwise direction of the vehicle body, at a position inwardly of the roofside molding 18, and brought into contact at a forward end portion 20A thereof with the rear surface of the outer surface portion 18B of the roofside molding 18, to thereby support the outer surface portion 18B from inside.

In the drawing, a protector 23 made of synthetic resin is secured to the forward end of the outer surface portion 18B of the roofside molding 18, which is doubly bent, and interposed between the outer surface portion 18B and the panel roof 11 and connecting the both members to each other.

Furthermore, the forward end portion 20A of the channel 20, which supports the outer surface portion 18B of the roofside molding 18 from rear side, is brought into contact with the upper surface of a portion of the inclined undersurface 18A of the roofside molding 18, the portion being positioned outwardly in the widthwise direction of the vehicle body, to thereby prevent the roofside molding 18 from moving upwardly.

As shown in Fig. 3 for example, in the door glass 15, a slide piece 24 secured to a side end portion 15B of the door glass 15 through a screw 24A and a bracket 24B is slidably coupled into one of guide grooves 25 formed in front and rear posts 13B of the door frame 13, slidably guided in the vertical direction, and the outer surfaces of the door glass 15 and the door frame 13 can be substantially flush with each other. In Fig. 3, designated at 26 is a center pillar.

Here, the door glass weather strip 19 is positioned inwardly of the guide groove 25 in a compartment 17 and brought into contact with the inner surface of the door glass 15.

Furthermore, an upper side 19A of the door glass weather strip 19 is clamped between the upper end edge portion 15A of the door glass 15 and the door frame 13 by the upper end edge portion 15A when the door glass 15 is fully closed, and, at this time, the outer surface of the upper side 19A of the door glass weather strip 19 is substantially flush with the outer surfaces of the door glass 15 and the door frame 13.

A drip channel 16 is recessed inwardly of the vehicle body at the side of the roof panel 11 at a position close to the upper end portion of the roofside rail 12 and a rear portion of the drip channel 16 is connected to the upper end portion of the roofside rail 12 through a bonding agent 27.

A main door weather strip 28 is secured to the door frame 13 at a position in the rear of the door glass weather strip 19, for sealing a space formed between the door and the vehicle body when the door is closed.

In this embodiment, the side portion of the roof panel 11 in the widthwise direction of the vehicle body covers the roofside rail 12, and all of the members disposed outwardly of the roofside rail 12, including the roofside molding 18, the door weather strip 14, the upper side 13A of the door frame 13, the door glass weather strip 19 and the upper end edge portion 15A of the door glass 15, are smoothly continued to the outer surface of the roof panel 11 and form the outer surfaces substantially flush with one another, so that the air resistance and the wind breaking sound can be reduced during running of the motor vehicle and the outer appearance of the vehicle can be improved.

Particularly, in this embodiment, the inclined under surface 18A of the roofside molding 18 directed outwardly in the widthwise direction of the vehicle body and downwardly is brought into pressing contact with the door weather strip 14 when the door is closed to prevent the door weather strip 14 from moving inwardly, whereby the outer surface of the door weather strip 14 is held to be flush with the outer surface of the vehicle body, so that the flush conditions can be maintained without the sealing performance being impaired against storm water and the like.

Furthermore, in this embodiment, the roof panel 11 is provided at the side end portion thereof with the channel 20 extending inwardly in the widthwise direction of the vehicle body and connecting the end portion of the roof panel 11 to the roofside rail 12, and the roofside molding 18 is secured to the channel 20 at a position between the end portion 11A of the roof panel 11 in the widthwise direction of the vehicle body and the roofside rail 12, whereby the side end portion of the roof panel 11 is increased in rigidity, so that the roofside molding 18 can be firmly supported to be in pressing contact with the door weather strip 14, thus securing the reliable sealing.

Further, the portion where the roofside molding 18 is secured to the channel 20 is positioned inwardly of the outer surface of the vehicle body, so that the outer appearance of the vehicle can be improved.

The outer surface portion 18B of the roofside molding 18 is disposed so as to cover the weld point 21 between the roof panel 11 and the channel 20 from outside, so that the weld traces can be covered to improve the outer appearance of the vehicle.

The channel 20 extends inwardly of the roofside molding 18 and outwardly of the end portion 11A of the panel roof 11 in the widthwise direction of the vehicle body and is brought into contact at the forward end portion 20A thereof with the rear surface of the outer surface portion 18B of the roofside molding 18 to support it from inside, whereby the outer surface portion 18B of the roofside molding 18 is held to be substantially flush with the outer surface of the vehicle body.

Furthermore, the roofside molding 18 is restricted by the forward end portion 20A of the channel 20 from being displaced upwardly, whereby the roofside molding 18 is held in close contact with the door weather strip 14 when the door is closed, thus improving the sealing performance.

In this embodiment, the drip channel 16 is recessed inwardly of the vehicle body at the side of the roof panel 11 at a position close to the upper end portion of the roofside rail 12, and the rear side portion of the drip channel 16 is connected to the upper end portion of the roofside rail 12, so that the roofside portion can be increased in rigidity and the irregularities on the outer surface of the vehicle body in the vicinity of the roofside portion can be reduced by covering the roofside rail 12, to thereby decrease the air resistance of the vehicle.

In the above embodiment, as shown in Fig. 3, the guide grooves 25 are formed in the front and rear posts 13B of the door frame 13, and further, the door glass 15 is vertically guided by the guide grooves 25 through the slide pieces 24, but the relationship between the front and rear posts 13B of the door frame 13 and the door glass 15 may be determined such that the outer surface of the door glass 15 is substantially flush with the outer surface of the door frame 13 during the guiding.

**Claims**

1. A construction of a roofside portion of a motor vehicle, wherein said construction comprises a roof panel (11), a side portion of which in the widthwise direction of a vehicle body covers an upper portion of a roofside rail (12) in the widthwise direction thereof, a roofside molding (18) secured to an end portion (11A) of said roof panel (11) in the widthwise direction of said vehicle body and covering the outer side and the undersurface of said end portion (11A), an upper side (13A) of a door frame (13), a door weather strip (14) adapted to be clamped between said upper side (13A) of said door frame (13) and said roofside molding (18) when a door is closed, a door glass (15), a door glass weather strip (19) secured to said door frame (13) in a manner to be clamped between an upper end edge portion (15A) of said door glass (15) and said upper side (13A) of said door frame (13) when said door glass (15) is closed, and the outer surfaces of said side portion of said roof panel (11), said roofside molding (18), said upper side (13A) of said door frame (13), said door weather strip (14), said door glass weather strip (19) and said door glass (15) are substantially flush with one another in a manner to be smoothly continued when said door glass (15) and said door are fully closed, characterized in that a drip channel (16) is recessed inwardly of said vehicle body at the side of said roof panel (11), that said drip channel (16) is completely and integrally formed by a portion of said roof panel (11) positioned close to an upper end portion of said roofside rail (12) and that a rear portion of said drip channel (16) is connected to said upper end portion of said roofside rail (12).

2. A construction of a roofside portion of a motor vehicle as set forth in claim 1, wherein an undersurface (18A) of said roofside molding (18) contacting an upper surface of said door weather strip (14) when said door is closed is formed to provide an inclined surface directed inwardly in the widthwise direction of said vehicle body and downwardly.

3. A construction of a roofside portion of a motor vehicle as set forth in claim 1 or 2, wherein said roof panel (11) is provided at said end portion (11A) thereof with a channel (20) extending inwardly in the widthwise direction of said vehicle body and connecting said end portion (11A) of said roof panel (11) to said roofside rail (12), and said roofside molding (18) is secured to said channel (20) at a position between said end portion (11A) of said roof panel (11) in the widthwise direction of said vehicle body and said roofside rail (12).

4. A construction of a roofside portion of a motor vehicle as set forth in claim 3, wherein said channel (20) extends outwardly of said end portion (11A) of said roof panel (11) in the widthwise direction of said vehicle body, at a position inwardly of said roofside molding (18), and is brought into contact at a forward end portion (20A) thereof with a back side of the inclined surface of said roofside molding (18) to support the same from inside.

5. A construction of a roofside portion of a motor vehicle as set forth in any one of claims 1 to 4, wherein, in said door glass (15), a slide piece (24) secured to a side end portion (15B) of said door glass (15) through a screw (24A) and a bracket (24B) is slidably coupled into one of front and rear posts (13B) of said door frame (13), slidably guided in the vertical direction, and the outer surfaces of said door glass (15) and said door frame (13) can be substantially flush with each other.

**Patentansprüche**

1. Konstruktion eines dachseitigen Teils eines Kraftfahrzeugs, wobei die Konstruktion eine Dachtafel (11), von der ein Seitenteil in der Querrichtung eines Fahrzeugaufbaus einen oberen Teil eines dachseitigen Holms (12) in dessen Querrichtung überdeckt, ein an einem Endabschnitt (11A) der Dachtafel (11) in der Querrichtung des Fahrzeugaufbaus befestigtes und die Außenseite sowie die untere Fläche des Endabschnitts (11A) überdeckendes dachseitiges Formteil (18), einen oberen Rand (13A) eines Türrahmens (13), einen zwischen den oberen Rand (13A) des Türrahmens (13) und das dachseitige Formteil (18) im Schließzustand der Tür einklemmbaren Tür-Dichtungsstreifen (14), ein Türfenster (15), einen am Türrahmen (13) derart befestigten Türfenster-Dichtungsstreifen (19), daß er im Schließzustand des Türfensters (15) zwischen einem oberen Kantenteil (15A) des Türfensters (15) und dem oberen Rand (13A) des Türrahmens (13) eingeklemmt wird, umfaßt und die Außenflächen des Seitenteils der Dachtafel (11), das dachseitige Formteil (18), der obere Rand (13A) des Türrahmens (13), der Tür-Dichtungstreifen (14), der Türfenster-Dichtungsstreifen (19) und das Türfenster (15) im wesentlichen miteinander in einer Weise bündig sind, daß sie sich im völlig geschlossenen Zustand des Türfensters (15) sowie der Tür stufenlos fortsetzen, dadurch gekennzeichnet, daß einwärts vom Fahrzeugaufbau in der Seite der Dachtafel (11) eine Wasserrinne (16) vertieft ausgestaltet ist, daß die Wasserrinne (16) völlig sowie einstückig durch ein nahe einem oberen Endabschnitt des dachseitigen Holms (12) angeordnetes Teil der Dachtafel (11) gebildet ist und daß ein innenseitiger Teil der Wasserrinne (16) mit dem oberen Endabschnitt des dachseitigen Holms (12) verbunden ist.

2. Konstruktion eines dachseitigen Teils eines Kraftfahrzeugs nach Anspruch 1, dadurch gekennzeichnet, daß eine eine obere Fläche des Tür-Dichtungstreifens (14) im Schließzustand der Tür berührende untere Fläche (18A) des dachseitigen Formteils (18) als eine in der Querrichtung des Fahrzeugaufbaus einwärts sowie abwärts geneigte Fläche ausgebildet ist.

3. Konstruktion eines dachseitigen Teiles eines Kraftfahrzeugs nach Anspruch 1 oder 2, dadurch gekennzeichnet, daß die Dachtafel (11) an ihrem Endabschnitt (11A) mit einer in der Querrichtung des Fahrzeugaufbaus einwärts sich erstreckenden sowie den Endabschnitt (11A) der Dachtafel (11) mit dem dachseitigen Holm (12) verbindenden Profilleiste (20) versehen und das dachseitige Formteil (18) an der Profilleiste (20) an einer Stelle zwischen dem Endabschnitt (11A) der Dachtafel (11) in der Querrichtung des Fahrzeugaufbaus sowie dem dachseitigen Holm (12) befestigt ist.

4. Konstruktion eines dachseitigen Teils eines Kraftfahrzeugs nach Anspruch 3, dadurch gekennzeichnet, daß sich die Profilleiste (20) vom Endabschnitt (11A) der Dachtafel (11) in der Querrichtung des Fahrzeugaufbaus an einer innerhalb des dachseitigen Formteils (18) befindlichen Stelle auswärts erstreckt und an ihrem vorderen Endstück (20A) mit ·einer Rückseite der geneigten Fläche des dachseitigen Formteils (18) für dessen Abstützung von der Innenseite her in Anlage ist.

· 5. Konstruktion eines dachseitigen Teils eines Kraftfahrzeugs nach einem der Ansprüche 1 bis 4, dadurch gekennzeichnet, daß bei dem in der vertikalen Richtung verschiebbar geführten Türfenster (15) ein an einem seitlichen Kantenteil (15B) des Türfensters (15) durch eine Schraube (24A) sowie einen Träger (24B) befestigtes Gleitstück (24) verschiebbar in einen der front- und rückwärtigen Pfosten (13B) des Türrahmens (13) eingesetzt ist und die Außenflächen des Türfensters (15) sowie des Türrahmens (13) im wesentlichen bündig miteinander sein können.

**Revendications**

1. Une structure d'une partie latérale de pavillon de véhicule automobile, comportant un panneau de pavillon (11), dont une partie latérale dans la direction de la largeur d'une carrosserie de véhicule couvre une partie supérieure d'un longeron latéral de pavillon (12) dans la direction de la largeur de celui-ci, une moulure (18) fixée à une partie terminale (11A) dudit panneau de pavillon (11) dans la direction de la largeur de la carrosserie de véhicule et couvrant le côté extérieur et la surface inférieure de la dite partie terminale (11A), un côté supérieur (13A) d'un encadrement de portière (13), un bourrelet d'étanchéité de portière (14) appelé à être serré entre ledit côté supérieur (13A) dudit encadrement de portière (13) et ladite moulure (18) latérale de pavillon quand la portière est fermée, une glace de portière (15), un bourrelet d'étanchéité de glace de portière (19) fixé sur cet encadrement de portière de façon à être serré entre une partie supérieure d'arête terminale (15A) de ladite glace de portière (15) et ledit côté supérieur (13A) dudit encadrement de portière (13) quand ladite glace de portière (15) est fermée, les surfaces extérieures respectives de ladite partie latérale dudit panneau de pavillon (11), de ladite moulure latérale de pavillon (18), dudit côté supérieur (13A) dudit encadrement de portière (13), dudit bourrelet d'étanchéité de portière (14), dudit bourrelet d'étanchéité de la glace de portière (19) et de ladite glace de portière (15) affleurant sensiblement les unes avec les autres de façon à présenter un profil lisse continu quand ladite glace de portière (15) et ladite portière sont complètement fermées, caractérisée en ce qu'un canal.d'évacuation (16) est formé en retrait vers l'intérieur de la carrosserie de véhicule sur le côté dudit panneau de pavillon (11), en ce que ledit canal d'évacuation (16) est intégralement formé par une partie dudit panneau de pavillon (11) approximité d'une partie terminale dudit longeron de pavillon (12) et en ce qu'une partie arrière dudit canal d'évacuation (16) est reliée à cette partie terminale dudit longeron latéral de pavillon (12).

2. Une structure d'une partie latérale de pavillon de véhicule automobile selon la revendication 1 dans laquelle une surface inférieure (18A) de ladite moulure latérale de pavillon (18) qui est en contact avec une surface supérieure dudit bourrelet d'étanchéité de portière (14) quand ladite portière est fermée définit une surface inclinée vers l'intérieur dans la direction de la largeur de ladite carrosserie de véhicule et vers le bas.

3. Une structure d'une partie latérale de pavillon de véhicule automobile selon la revendication 1 ou 2, dans laquelle ledit panneau de pavillon (11) est pourvu à ladite partie terminale latérale (11A) de celui-ci d'un profilé (20) qui s'étend vers l'intérieur dans la direction de la largeur de ladite carrosserie de véhicule et relie ladite ladite partie terminale (11A) dudit panneau de pavillon (11) audit longeron latéral de pavillon (12), et dans lequel ladite moulure (18) est fixée sur ledit profilé (20) dans une zone située entre ladite partie terminale (11A) dudit panneau de pavillon (11) dans la direction de la largeur de ladite carrosserie de véhicule et ledit longeron latérale de pavillon (12).

4. Une structure d'une partie latérale de pavillon de véhicule automobile selon la revendication 3, dans laquelle ledit profilé (20) s'étend vers l'extérieur de ladite partie terminale (11A) dudit panneau de pavillon (11) dans la direction de la largeur de ladite carrosserie de véhicule dans une zone située à l'intérieur de ladite moulure latérale de pavillon (18) et est amené en contact, à une partie terminale avant (20A), avec une face arrière de la surface inclinée de ladite moulure latérale de pavillon (18) pour supporter celle-ci intérieurement.

5. Une structure d'une partie latérale de véhicule automobile selon une quelconque des revendications 1 à 4, dans laquelle, une pièce coulissante (24) fixée à une partie latérale (15B) de ladite glace de portière (15) par une vis (24A) et un crochet (24B) est montée à coulissement dans l'un des montants avant et arrière (13B) dudit encadrement de portière (13) et guidée en direction verticale, les surfaces extérieures de ladite glace de portière (15) et dudit encadrement de portière (13) étant susceptibles d'affleurer l'une avec l'autre.

# F I G. 1

0 126 895

# FIG.2

# FIG.3

2